## Europäisches Patentamt

## European Patent Office

## Office européen des brevets

(11) Publication number: **0 195 390**
A2

# EUROPEAN PATENT APPLICATION

(21) Application number: **86103502.0**

(22) Date of filing: **14.03.86**

(51) Int. Cl.⁴: **H 02 J 3/40**

(30) Priority: **18.03.85 SE 8501307**

(43) Date of publication of application:
**24.09.86 Bulletin 86/39**

(84) Designated Contracting States:
**CH DE FR GB LI**

(71) Applicant: **ASEA AB**

**S-721 83 Västeras(SE)**

(72) Inventor: **Abdel-Aty, Edris**
**Kaprifolgatan 95**
**S-722 43 Västeras(SE)**

(74) Representative: **Boecker, Joachim, Dr.-Ing.**
**Rathenauplatz 2-8**
**D-6000 Frankfurt a.M. 1(DE)**

(54) Method and device for preventing an electric alternating current generator from falling out of step.

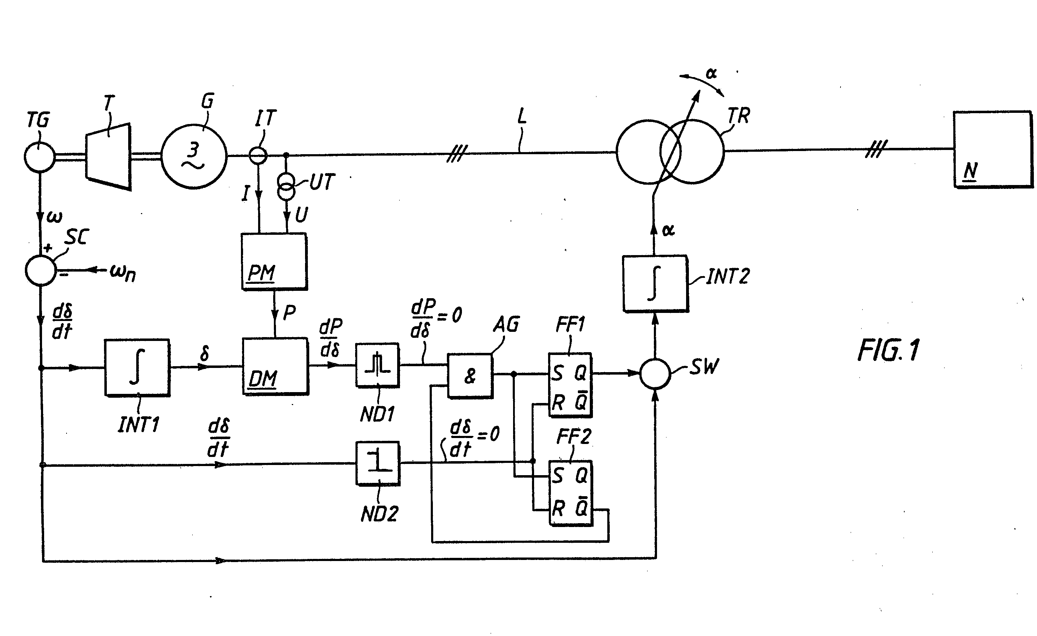

(57) Method for preventing an electric alternating current generator from falling out of step. According to the invention a transformer (TR) with controllable phase shift ($\alpha$) is connected between said generator (G) and an a.c. network (N). Sensing members (TG, SC, INT1) form a measure of the load angle ($\delta$) of the generator (G) and its rate of change ($d\delta/dt$). The attainment of a predetermined point, suitably the maximum point, of the power-load angle characteristic of the generator is sensed by means of a differentiating circuit (DM) and level detecting (ND1) means. The attainment of this working point initiates a change of the phase shift ($\alpha$) of the transformer with the same rate as the rate of change ($d\delta/dt$) of the load angle ($\delta$) of the generator. Sensing members (ND2) sense when the load angle velocity has dropped to a low value, preferably zero, whereupon the change of the phase shift of the transformer is interrupted. In this way, the risk of the generator to fall out of step is effectively prevented for certain types of faults, for example short-circuits in the a.c. network (Figure 1).

FIG.1

ASEA AB
S-721 83 Västeras / Sweden

Method and device for preventing an electric alternating
current generator from falling out of step

The invention relates to a method and a device for preventing an electric alternating current generator from falling out of step.

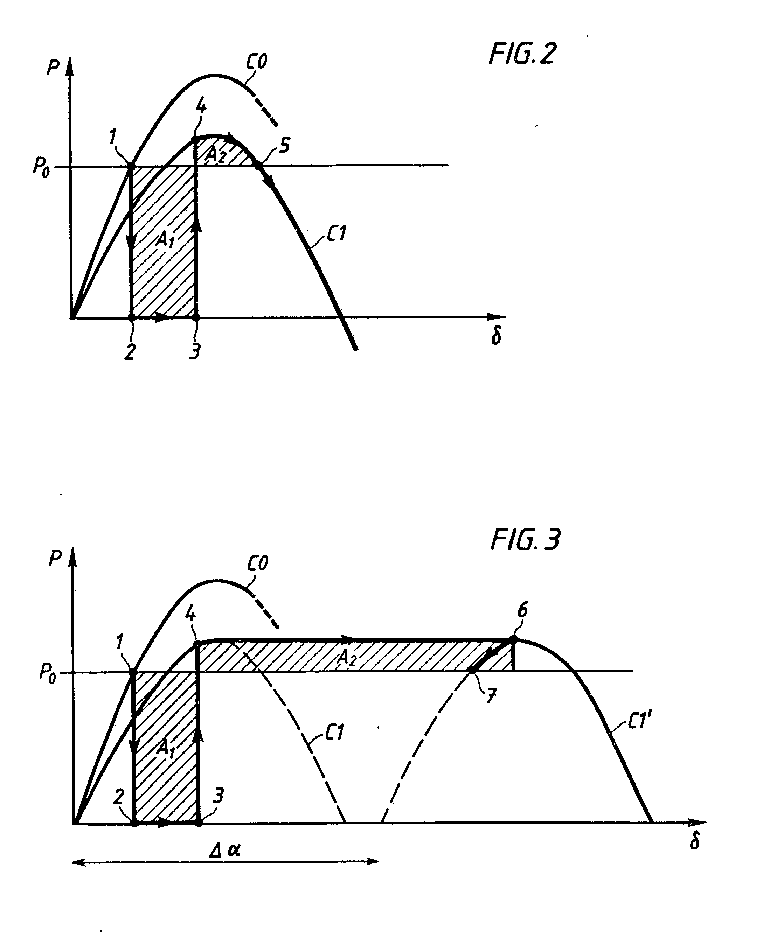

It is well known that an a.c. generator connected to an a.c. network may fall out of step, for example in case of certain types of faults in the a.c. network. This is illustrated in Figure 2, in which curve CO represents the electric output power P of the generator as a function of the load angle $\delta$ of the generator during undisturbed operations. The mechanical driving power which is supplied to the generator is designated $P_O$, and the generator assumes a stable operating position at point 1, where the supplied mechanic driving power is in balance with the electric output power. If, for example, a three-phase fault occurs in the network, the active output power of the generator drops to a low value (zero in the figure), and at the first moment the generator operates at point 2 in Figure 2. The approximately constant driving power supplied then accelerates the generator thereby increasing the load angle $\delta$. At point 3 in the figure the existing protective means in the network are assumed to have been responded and disconnected the faulty part of the network. The generator will now operate on a new characteristic, which is designated C1 in Figure 2. At the first moment the generator operates at point 4, and because of its over synchronous speed attained by the previous acceleration the load angle will for some time continue to increase until the over synchronous kinetic energy has been consumed. If during this process the angle $\delta$ exceeds the value corresponding to point 5 the generator will again be accelerated and fall out of step. The hatched area $A_1$ in the figure corresponds to the driving energy supplied prior to disconnection of the fault. During the process between points 4 and 5, the output power of the generator is greater than the driving power supplied, and the net energy delivered during this period corresponds to the hatched area $A_2$ in the figure. Since in the case illustrated the area $A_2$ is smaller than the area $A_1$, the speed of the generator at point 5 will still exceed the synchronous speed, which results in the generator falling out of step.

A transformer with controllable phase shift is known from the EP-B-23 366. This publication further states how such a transformer can be connected between different parts of an a.c. network to reduce oscillations in the network, to limit short-circuit currents, if any, and to protect the generator against overload.

The invention aims at finding a method and a device of the above-mentioned kind by means of which the falling out of step of the generator can be effectively prevented.

To achieve this aim the invention suggests a method according to the introductory part of claim 1, which is characterized by the features of the characterizing part of Claim 1.

Further developments of this method are characterized by the features of Claims 2 to 7.

A device for carrying out the method is characterized by the features of Claim 8.

21 702 PE

0195390

Further developments of this device are characterized by the features of Claims 9 to 12

According to a preferred embodiment, the attainment of the predetermined point on the power-load angle characteristic of the generator is sensed by generating a quantity corresponding to the differential coefficient of the active output power of the generator with respect to the load angle, and comparing this quantity with a predetermined limiting value, which is preferably zero or almost zero. In this way, the change of the phase shift of the controllable transformer will be initiated at or near the maximum of the characteristic of the generator at that time. The retarding torque on the generator will thereby always be maintained at the maximal possible value independently of changes in the characteristic. (The characteristic is at any given moment, and in a manner unknown to the control system, determined by the network configuration at that moment and by the loads connected to the network.) According to a preferred embodiment the phase shift of the transformer is changed at the same rate as the rate of change of the load angle of the generator, which results in the retarding torque on the generator being all the time kept at a maximum so that the retardation of the generator to synchronous speed will be obtained in the shortest possible time. According to a further preferred embodiment of the invention, the load angle velocity of the generator is sensed and the change of the phase shift of the transformer is interrupted when this velocity has fallen to a predetermined limiting value, preferably zero. By "load angle velocity" is meant the rate of change $d\delta$ /dt of the load angle of the generator. In this way the advantage is achieved that the phase shift change of the transformer is interrupted at the theoretically proper moment, namely, when the generator has again been retarded to synchronous speed. In a preferred manner, the quantity corresponding to the load angle velocity can be generated by

20.2.1986
21 702 PB
0195390

sensing the speed of rotation of the generator and forming the difference between the sensed speed of rotation and the synchronous speed.

The invention will now be described in greater detail with reference to the accompanying drawings showing - by way of example - in

Figure 1 a device for carrying out the method according to the invention,

Figure 2 the operation sequence in the case of the falling out of step of a generator-operating in a prior art manner,

Figure 3 the operation sequence in case of using the method according to the invention by which the falling out of step of the generator is effectively prevented .

Figure 1 shows a three-phase a.c. generator G, which is connected to a three-phase electric power network N by means of a line L. A water or steam turbine T is connected to the drive shaft of the generator G. A tachometer generator TG is connected to the turbine or generator shaft and delivers a signal $\omega$, which is a measure of the instantaneous speed of rotation of the generator G. A current transformer IT measures the generator current I, and a voltage transformer UT senses the generator voltage U. These quantities are supplied to a power measuring circuit PM, which in a manner known per se forms a signal which is a measure of the active electric output power P of the generator G.

In the line L between the generator G and the network N there is connected a transformer TR with a controllable phase shift angle $\alpha$. This transformer TR may, for example, be of the type described in the above-mentioned EP-B-23 366. The transformer TR is supplied with a control signal $\alpha$ in

20.2.1986
21 782 PE
0195390

such a way that the phase shift of the transformer TR will always correspond to the value of the supplied control signal.

A summation circuit SC is supplied, on the one hand, with the output signal $\omega$ of the tachometer generator TG and on the other hand, with a negative sign, with a signal $\omega_n$ which corresponds to the afore-mentioned synchronous speed or frequency. The synchronous speed is the speed of rotation (or frequency) that the generator G has when operating with a constant load angle, that is, with exactly the same frequency as the frequency of the network N. If the supply frequency is constant, the signal $\omega_n$ may consist of a constant value. Alternatively, the signal $\omega_n$ may be obtained through measurement, preferably with a suitable time lag, of the frequency in the network N. The output signal from the summation circuit SC therefore constitutes the rate of change of the load angle $\delta$, that is, $d\delta/dt$. This quantity is supplied to an integrator INT1, the output signal of which constitutes a measure of the load angle $\delta$. This signal, as well as the signal P, is supplied to a differentiating circuit DM, which forms and delivers the differential coefficient $dP/d\delta$ of the active electric output power of the generator G with respect to the load angle.

The internal composition of the differentiating circuit DM is not the subject of the invention, and the circuit may operate in any suitable manner known per se. For example, the circuit may form the rate of change of P and the rate of change of $\delta$ and divide these two quantities by each other to generate the output signal. Alternatively, the differentiating circuit DM may sense P and $\delta$ at regular intervals, compute the changes in these quantities between the two latest sensing incidents and divide these two changes by each other.

20.2.1986
21 702 PE
0195390

The signal $dP/d\delta$ is supplied to a level detector ND1, the output signal of which becomes high if the input signal is zero or near zero. The output signal of the level detector ND1 is in the figure designated $dP/d\delta = 0$ and is supplied to a first input of an AND-circuit AG.

The output signal of the AND-circuit AG is supplied to the S-inputs (the set inputs) of two bistable flip-flops FF1 and FF2. The output signal Q from flip-flop FF1 is supplied to and controls an electronic switching member SW which, when said output signal Q is high, passes the signal $d\delta/dt$ on to an integrator INT2. The output signal $\overline{Q}$ from flip-flop FF2 is supplied to a second input of the AND-circuit AG.

The output signal $d\delta/dt$ from the circuit SC is supplied to a second level detector ND2, the output signal of which becomes high if $d\delta/dt$ is lower than a predetermined value, preferably zero or near zero. The output signal from this level detector ND2 is designated as $d\delta/dt = 0$ and is supplied to the R-inputs (the reset inputs) of flip-flops FF1 and FF2. When the output signal from flip-flop FF1 is high, the signal $d\delta/dt$ is fed to the integrator INT2 via the switching member SW. The integrator INT2 will then change the value of its output signal $\alpha$, which determines the phase shift of the transformer TR, with the same speed as the change of the load angle $\delta$.

The mode of operation of the invention will now be described with reference to Figure 3 which - as Figure 2 - shows the active electric output power P of the generator G plotted against the load angle $\delta$ of the generator G. The conditions are the same as those shown in Figure 2. The generator G first operates in steady state at point 1 on the power-load angle characteristic CO. A three-phase fault occurring in the network N causes the active output power to drop to near zero, which gives the working point 2. The subsequent accel-

20.2.1986
0195390

eration, caused by the excessive driving power, increases the load angle and moves of the working point from 2 to 3. The kinetic energy supplied to the generator G during this interval, which energy corresponds to the speed increase of the generator G, is indicated by the hatched area $A_1$ in Figure 3. When the fault has been eliminated, the working point of the generator G is moved to the point 4 on the new characteristic C1. Since the speed of the generator G now exceeds the synchronous speed, the load angle $\delta$ will continue to increase and the working point of the generator G move along the characteristic C1 to the right from the point 4. When the working point reaches or comes close to the maximum point on the characteristic C1, the output signal from the level detector ND1 becomes high. Both flip-flops FF1 and FF2 are assumed to have been set to zero. Therefore, on both the inputs to the AND-circuit AG the input signal is now high, and with the output signal of the AND-circuit AG turning high the flip-flops FF1 and FF2 are set, whereupon the electronic switching member SW admits the signal $d\delta/dt$ to the integrator INT2. The output signal of the integrator INT2 will therefore change at exactly the same rate as the rate of change $d\delta/dt$ of the load angle $\delta$. Since the output signal of the integrator INT2 controls the phase shift of transformer TR, the phase shift will be changed at the same rate. This means that, in Figure 3, the characteristic C1 will be moved to the right at the same rate as the load angel $\delta$ increases, which in turn results in the working point of the generator G being always positioned at the maximum point of the characteristic. The electric output power of the generator G, and hence the retarding torque on the generator G, are therefore always maintained at their maximum values. The hatched area $A_2$ in Figure 3 corresponds to the net retarding energy of the generator G, and when this energy becomes equal to the accelerating energy supplied during the duration of the fault, the generator G has been retarded to the synchronous speed. This occurs at point 6 in Figure 3. At or near this point 6 the output signal $d\delta/dt$ from the circuit SC becomes zero or almost zero, which results in the output signal from the level detector ND2 becoming high. The flip-flops FF1 and FF2 are then reset, which results in the input signal to the integrator INT2 being disconnected and the output signal becoming constant. The phase shift of the transformer TR is then no longer changed, and the characteristic of the generator G is no longer moved to the right in Figure 3 but assumes the position designated C1'. Since the output power exceeds the power supplied to the generator G, the generator G will be retarded somewhat further and thus reduce the load angle until stable operation is obtained at the working point 7 in Figure 3.

The flip-flops FF1 and FF2 may possibly be provided with automatic or manually activated reset members which, upon start-up of the device and/or after it has entered into operation, reset the flip-flops ($Q = 0$, $\bar{Q} = 1$).

As will be clear from the foregoing description, the method and the device according to the invention effectively prevent the generator from falling out of step and provide the fastest possible restoration of stable operation.

As will be clear from Figure 3, the phase shift of the transformer TR has been changed, during the process described, by the amount $\Delta\alpha$. Depending on the design of the transformer TR and its control system, it may be suitable to arrange for a slow restoration of the phase shift $\alpha$ of the transformer TR to a suitable initial value. Similarly, the integrator INT1 can suitably be provided with a slow-acting reset means which sets the integrator INT1 to zero.

The foregoing description shows how the determination of that point on the characteristic, where the the change of the phase shift of the transformer TR begins, is made by forming the differential coefficient of the generator power with respect to the load angle and comparing this with a predetermined value, which in the example described above is zero or near zero. It is, of course, possible that this predetermined value deviates more or less from zero, but by doing so the retarding torque on the generator G will be reduced. Alternatively, of course, the determination of that point on the generator characteristic, where the change of the phase shift of the transformer TR is to be triggered, can be made in other ways. Thus, for example, the load angle of the generator G can be measured or determined in a manner known per se and be compared with a predetermined limiting value, preferably a limiting value which is about $90^{\circ}$. If a value of the load angle is calculated or determined in this way, this value of the load angle can be employed as input signal to the differentiating circuit DM and, after differentiation, to the level detector ND2.

The transformer TR with controllable phase shift described above in connection with the example of an embodiment, is only one example, and other types of transformer with controllable phase shift may be used within the scope of the inventive idea.

The embodiment of the control circuit described above is only one example of how the desired function according to the invention can be achieved. Alternatively, instead of the shown analog and logic circuits shown, a microprocessor can be used which can be programmed in a simple manner to provide the desired function.

CLAIMS                                      0195390

1. Method for preventing an electric alternating current generator from falling out of step, c h a r a c t e r i z- e d in that a transformer (TR) with controllable phase shift ($\alpha$) is connected between said generator (G) and the a.c. network (N) to which the generator is linked, that the attainment of a predetermined point on the power-load angle characteristic (C1) of the generator is sensed and/or calculated and that thereafter the phase shift ($\alpha$) of the trans- former is changed in step with the change of the load angle ($\delta$) of the generator.

2. Method according to claim 1, c h a r a c t e r i z e d in that the attainment of the predetermined point is sensed by forming a quantity $(dP/d\delta)$ corresponding to the differen- tial coefficient of the active output power (P) of the generator with respect to the load angle ($\delta$) and comparing this quantity with a predetermined limiting value.

3. Method according to claim 2, c h a r a c t e r i z e d in that said limiting value is substantially equal to zero.

4. Method according to any of the preceding claims, c h a- r a c t e r i z e d in that the load angle velocity (d $\delta$ /dt) of the generator is sensed and that the change of the phase shift of the transformer is interrupted when the load angle velocity has dropped to a predetermined value.

5. Method according to claim 4, c h a r a c t e r i z e d in that said predetermined value is substantially equal to zero.

6. Method according to claim 4 or 5, c h a r a c t e r- i z e d in that the load angle velocity (d$\delta$/dt) is gen-

erated by forming the difference between the speed of rotation ($\omega$) of the generator and the synchronous speed ($\omega_n$).

7. Method according to any of the preceding claims, c h a r a c t e r i z e d  in that the phase shift ($\alpha$) of the transformer is controlled so that it is changed with the same rate ($d\delta/dt$) as the load angle ($\delta$).

8. Device for carrying out the method according to any of the preceding claims, c h a r a c t e r i z e d  in that it comprises first sensing members (DM, ND1) for sensing that a predetermined point on the power-load angle characteristic (C1) of the generator has been reached, and that it comprises control means (SC, SW, INT2) arranged to control thereupon the phase shift of the transformer so that it is changed in step with the change of the load angle ($\delta$) of the generator.

9. Device according to claim 8, c h a r a c t e r i z e d  in that said first sensing members comprise members (DM) arranged to form a quantity ($dp/d\delta$) corresponding to the differential coefficient of the active output power (P) of the generator with respect to the load angle ($\delta$) and comparing members (ND1) arranged to compare said quantity with a predetermined limiting value.

10. Device according to claim 8, c h a r a c t e r i z e d  in that it comprises members (ND2, AG) arranged to sense the load angle velocity ($d\delta/dt$) of the generator and to interrupt the change of the phase shift of the transformer when the load angle velocity is lower than a predetermined limiting value.

11. Device according to claim 10, c h a r a c t e r i z e d  in that it comprises members (TG, SC) for generating a quantity ($d\delta/dt$) corresponding to the load angle velocity of

20.2.1986
21 702 PE
0195390

the generator by forming the difference between the speed of rotation ($\omega$) of the generator and the synchronous speed ($\omega_n$).

12. Device according to claim 8, c h a r a c t e r i z e d in that it comprises members (SC, INT2) for controlling the phase shift ($\alpha$) of the transformer so that it is changed with the same rate ($d\delta/dt$) as the load angle ($\delta$).

20.2.1986
21 702 PE

0195390

FIG.1

0195390
20.2.1986
21 702 PE

*FIG.2*

*FIG.3*